# EUROPEAN PATENT APPLICATION

(11) **EP 4 664 637 A1**
(43) Date of publication of application: **17.12.2025**
(21) Application number: 24759553.1
(22) Date of filing: 05.02.2024
(51) Int. Cl.: H01M 50/244, H01M 50/209, H01M 50/264, H01M 50/289

(54) **BATTERY PACK**

(30) Priority: 21.02.2023 CN 202310142988; 21.02.2023 CN 202320275490 U
(71) Applicant: Jiangsu Zenergy Battery Technologies Group Co., Ltd., Suzhou City, Jiangsu 215500 (CN)
(72) Inventor: DU, Junfeng, Suzhou, Jiangsu 215500 (CN); CHENG, Zhenxing, Suzhou, Jiangsu 215500 (CN); GUI, Hao, Suzhou, Jiangsu 215500 (CN); JIN, Quanliang, Suzhou, Jiangsu 215500 (CN)
(74) Representative: WSL Patentanwälte Partnerschaft mbB
(86) International application number: PCT/CN2024/076133
(87) International publication number: WO 2024/174876

(57) **Abstract**

A battery pack and an electric device provided in the invention relate to the technical field of batteries. The battery pack includes a box body, a cross beam and a plurality of battery cell groups, the box body is provided with an accommodating chamber having an opening at an end, the box body includes a bottom plate and a frame body formed by a plurality of side plates in an enclosing manner, a direction perpendicular to the bottom plate is a first direction, and the plurality of side plates are fixedly connected to the bottom plate along the first direction; the cross beam is arranged in the accommodating chamber to divide the accommodating chamber into a plurality of accommodating units, a direction parallel to the bottom plate is a second direction, and the cross beam is perpendicular to the bottom plate and extends along the second direction; and the plurality of battery cell groups are arranged in the accommodating units along the second direction, a direction perpendicular to the cross beam is a third direction, and each battery cell group includes a plurality of battery cells stacked along the third direction, the cross beam abuts against at least one end surface of the battery cell group. In this way, the assembly of the battery cell groups is facilitated, and it is beneficial to fixing the battery cell groups.

## Description

### Cross-Reference to Related Application

The invention claims the priority of Chinese Patent Application No. 202310142988.4, filed with China National Intellectual Property Administration (CNIPA) on February 21, 2023, and entitled "Battery Pack and Electric device", and the Chinese Patent Application No. 202320275490.0, filed with China National Intellectual Property Administration (CNIPA) on February 21, 2023, and entitled "Battery Pack", which are herein incorporated by reference in their entireties.

### Technical Field

The invention relates to the technical field of batteries, and in particularly to a battery pack.

### Background

At present, in order to simplify the structure of a PACK to improve the space utilization rate and to simplify the mounting process thereof and save the production cost, a widely applied CTP technology is constantly innovating and developing. The CTP, that is, Cell To PACK, is to directly integrate batteries into a battery pack, thereby omitting an intermediate module architecture, simplifying the structure of the PACK, and improving the space utilization rate. With the removal of the module architecture, an optimal design is performed on the box body of the entire battery pack. However, in a practical design application process, it is urgent to solve the technical problem of how to better limit and fix battery cells with the removal of the module architecture.

In addition, in the battery pack in the related art, a plurality of battery cells fixed to a bottom plate by gluing, it is difficult to disassemble a single battery cell from the bottom plate after the glue is coagulated, it is easy to affect the adhesive fixing effect of several adjacent battery cells during the process of disassembling the single battery cell, and it is easy to damage the bottom plate during the process of disassembling the single battery cell, which adversely affects the maintenance of the battery pack; and in addition, when a battery cell is installed on the bottom plate, it is usually difficult to accurately fix the battery cell to a set location, such that the location of the glued battery cell is prone to a deviation, and thus it is necessary to disassemble the battery cell again and adjust the location thereof, resulting in relatively complex mounting of the battery cell.

### Summary

The objective of the invention includes, for example, providing a battery pack, which is able to effectively limit and fix a battery cell, thereby facilitating the simplification of the assembly process, so as to improve the assembly efficiency.

Embodiments of the invention are implemented in this way:
Some embodiments of the invention provide a battery pack, including:
a box body, the box body is provided with an accommodating chamber having an opening at an end, the box body includes a bottom plate and a frame body formed by a plurality of side plates in an enclosing manner, a direction perpendicular to the bottom plate is a first direction, and the plurality of side plates is fixedly connected to the bottom plate along the first direction;
a cross beam, the cross beam is arranged in the accommodating chamber to divide the accommodating chamber into a plurality of accommodating units, a direction parallel to the bottom plate is a second direction, and the cross beam is perpendicular to the bottom plate and extends along the second direction; and
a battery cell group, a plurality of battery cell groups are provided, and the plurality of battery cell groups are arranged in the plurality of accommodating units along the second direction, a direction perpendicular to the cross beam is a third direction, and the battery cell group includes a battery cell, and a plurality of battery cells are provided, the plurality of battery cells are stacked along the third direction,
wherein the cross beam abuts against at least one end surface of the battery cell group.

In some embodiments, on at least one side surface, facing the accommodating unit, of the cross beam and/or the side plate that forms the accommodating unit in the enclosing manner and is installed along the second direction, a buffer groove recessing along the third direction and a connecting portion are arranged at intervals along the second direction; a plurality of buffer grooves and a plurality of connecting portions are provided, and the connecting portion is configured for connecting two adjacent buffer grooves of the plurality of buffer grooves; and a length of the buffer groove along the second direction is less than a length of the battery cell, and the battery cell is able to be lapped on two connecting portions of the plurality of connecting portions.

In some embodiments, at least one buffer groove of the plurality of buffer grooves is penetrated along the first direction.

In some embodiments, the buffer groove includes a bottom wall and a side wall; and
an intersection between the side wall and the connecting portion transitions smoothly; and/or
an intersection between the bottom wall and the side wall transitions smoothly.

In some embodiments, the battery pack further includes a buffer pad, and the buffer pad is arranged on at least one side surface, facing the accommodating unit, of the cross beam and/or the side plate.

In some embodiments, a first mounting groove is provided in a top surface of the cross beam, a first through hole passing through a groove bottom of the first mounting groove is provided inside the cross beam, and a first connecting hole corresponding to the first through hole is provided in the bottom plate; and
the battery pack further includes a first fixing member, and the first fixing member is configured to pass through the first through hole to be connected to the first connecting hole, and fix the cross beam to the bottom plate; and in the first mounting groove, a height of a top end of the first fixing member is lower than a height of the top surface of the cross beam.

In some embodiments, the battery pack further includes a pressing strip, the pressing strip includes a pressing strip mounting portion and a pressing strip body portion, a plurality of pressing strip mounting portion are provided, and the pressing strip body portion is arranged between two adjacent pressing strip mounting portions of the plurality of pressing strip mounting portion, the pressing strip body portion extends along the third direction and is pressed on a top surface of the battery cell group, the pressing strip mounting portion is fixed to the cross beam and/or the side plate, and the pressing strip mounting portion is arranged at an intersection of the pressing strip and the side plate and/or the cross beam.

In some embodiments, the battery pack further includes a second fixing member; the pressing strip mounting portion includes a first pressing portion and a first plug-in connection portion perpendicular to the first pressing portion, a second mounting groove is provided in the first pressing portion, a second through hole is provided in a groove bottom of the second mounting groove, a second connecting hole corresponding to the second through hole is provided in the cross beam and/or the side plate, and the second fixing member passes through the second through hole to be connected to the second connecting hole, and fixes the pressing strip on the cross beam and/or the side plate.

In some embodiments, an upper surface of the second fixing member is lower than an upper surface of the pressing strip body portion.

In some embodiments, a plurality of spacer plates for dividing an inner cavity of the cross beam into a plurality of cavities are arranged inside the cross beam, the second connecting hole penetrates through a top surface of the cross beam and the spacer plate adjacent to the top surface of the cross beam, and the second fixing member is a riveting screw.

In some embodiments, the pressing strip body portion includes a second pressing portion and a second plug-in connection portion perpendicular to the second pressing portion, two ends of a top surface of the battery cell along the second direction are shoulders of the battery cell, the second pressing portion is pressed on the shoulders of the battery cell, the second plug-in connection portion is plugged into a gap between two adjacent battery cell groups of the plurality of battery cell groups, and/or the second plug-in connection portion is plugged into a gap between the battery cell group and the side plate.

In some embodiments, a thickness of the second plug-in connection portion gradually decreases along a direction facing away from the second pressing portion, and a size of the gap between the two adjacent battery cell groups is less than a maximum thickness of the second plug-in connection portion and is greater than a minimum thickness thereof, and a size of the gap between the battery cell group and the side plate is less than the maximum thickness of the second plug-in connection portion and is greater than the minimum thickness thereof.

In some embodiments, the pressing strip includes a first pressing strip, at least two first pressing strips are provided, and the at least two first pressing strips are respectively pressed on two opposite side edges of the top surface of the battery cell group.

In some embodiments, a section of the pressing strip body portion of the first pressing strip along the second direction is L-shaped.

In some embodiments, the pressing strip further includes a second pressing strip, at least one second pressing strip is provided, and the at least one second pressing strip is pressed on the top surface, away from the bottom plate, of the battery cell group.

In some embodiments, a section of the pressing strip body portion of the second pressing strip along the second direction is T-shaped.

In some embodiments, a third mounting groove is provided in the cross beam and/or the side plate, and the first plug-in connection portion is in interference fit with the third mounting groove.

In some embodiments, a plurality of spacer plates for dividing an inner cavity of the cross beam into a plurality of cavities are arranged inside the cross beam, and a bottom surface of the third mounting groove is located on the spacer plate adjacent to a top surface of the cross beam.

In some embodiments, two opposite sides of the third mounting groove are both provided with a supporting portion for supporting the first pressing portion, and the second connecting hole is provided in the supporting portion.

In some embodiments, an outer surface of the pressing strip body portion is covered with an elastic insulating layer.

In some embodiments, an outer surface of the pressing strip body portion is covered with an elastic insulating layer, an overall thickness of the elastic insulating layer and the second plug-in connection portion gradually decreases along a direction facing away from the second pressing portion, a maximum value of the overall thickness of the second plug-in connection portion and the elastic insulating layer is greater than a size of the gap between the two adjacent battery cell groups, and a minimum value thereof is less than the size of the gap between the two adjacent battery cell groups, and the maximum value of the overall thickness of the second plug-in connection portion and the elastic insulating layer is greater than a size of the gap between the battery cell group and the side plate, and the minimum value thereof is less than the size of the gap between the battery cell group and the side plate.

In some embodiments, the pressing strip mounting portion and the pressing strip body portion are integrally formed.

In some embodiments, a section of the pressing strip mounting portion along the second direction is the same as a section of the pressing strip body portion along the second direction.

In some embodiments, an avoidance groove is provided at a cooperative mounting location of the pressing strip mounting portion and the side plate and/or the cross beam.

In some embodiments, a cross beam mounting portion is arranged on the side plate and/or the bottom plate, and an end portion of the cross beam is fixedly connected to the cross beam mounting portion.

In some embodiments, a positioning slot is provided in the bottom plate, and an electrode terminal of the battery cell is plugged into the positioning slot.

In some embodiments, the battery pack further includes a busbar installed on the bottom plate in an insulating manner, the busbar is provided with a conducting portion for conducting the electrode terminal, the conducting portion is located in the positioning slot, and the busbar is fixedly connected to the bottom plate; and
in response to the electrode terminal being plugged into the positioning slot, the conducting portion conducts the electrode terminal.

In some embodiments, the positioning slot is a trench; and
the plurality of battery cells are arranged along an extension direction of the trench, and a plurality of conducting portions are arranged at intervals in the trench at locations corresponding to electrode terminals of the plurality of battery cells.

In some embodiments, the bottom plate is provided with a first strip-shaped protrusion portion and a second strip-shaped protrusion portion, which are parallel to each other, and the first strip-shaped protrusion portion and the second strip-shaped protrusion portion form the trench; and
a first heat exchange flow channel is arranged inside the first strip-shaped protrusion portion, and a second heat exchange flow channel is arranged inside the second strip-shaped protrusion portion.

In some embodiments, the first heat exchange flow channel and the second heat exchange flow channel are parallel to the trench.

In some embodiments, the bottom plate further includes a substrate portion, and the first strip-shaped protrusion portion and the second strip-shaped protrusion portion are both arranged on the substrate portion; and
a heat exchange through hole parallel to the first heat exchange flow channel is provided inside the substrate portion, and the heat exchange through hole at least partially extends below a groove bottom of the trench.

In some embodiments, the conducting portion is U-shaped and forms a U-shaped groove for plug-in connection with the electrode terminal; and
groove walls on two opposite sides of the U-shaped groove both protrude at the middle and form clamping protrusions for clamping the electrode terminal.

In some embodiments, the electrode terminal is provided with a plurality of strip-shaped protrusions in parallel; and
a plurality of plug-in connection grooves in plug-in connection with the plurality of strip-shaped protrusions are correspondingly provided in the conducting portion.

In some embodiments, the positioning slot is a rectangular groove, a V-shaped groove, a spherical groove, or a conical groove.

In some embodiments, the bottom plate is provided with an insulating heat conduction layer, and the battery cell is pressed on the insulating heat conduction layer.

The beneficial effects of the embodiments of the invention include, for example:
according to the battery pack provided in the embodiments of the invention, the box body is provided with the accommodating chamber, and the cross beam is arranged in the accommodating chamber to divide the accommodating chamber into a plurality of accommodating units. The battery cell group is arranged in each accommodating unit, and the cross beam abuts against the battery cell group. In this way, the cross beam is able to better abut against the battery cell group to effectively limit and fix the battery cell group, so that the stability of the battery cell group is better. Moreover, the assembly process of the battery cell group is simplified, so that the assembly is more convenient and faster, thereby facilitating an improvement in the assembly efficiency.

### Brief Description of the Drawings

To illustrate technical solutions in the embodiments of the invention more clearly, a brief introduction on the drawings to be used in the embodiments is given below. It should be understood that the following drawings only illustrate some embodiments of the invention, and thus should not be regarded as limitations to the scope, and for those ordinary skilled in the art, other related drawings may also be obtained according to these drawings without creative efforts.
Fig. 1 is a schematic structural diagram of a battery pack provided in an embodiment of the invention;
Fig. 2 is a schematic structural diagram of connection of a box body and a cross beam of a battery pack provided in an embodiment of the invention;
Fig. 3 is a schematic structural diagram of a battery cell group of a battery pack provided in an embodiment of the invention;
Fig. 4 is a schematic structural diagram of a first angle of view of a cross beam of a battery pack provided in an embodiment of the invention;
Fig. 5 is a partial enlarged schematic diagram of a location A in Fig. 4;
Fig. 6 is a schematic structural diagram of a battery pack provided in an embodiment of the invention, in which a battery cell abuts against a cross beam;
Fig. 7 is a split schematic structural diagram of the cross beam and the battery cell in Fig. 6;
Fig. 8 is a partial enlarged schematic diagram of a location B in Fig. 7;
Fig. 9 is a schematic structural diagram of a bottom plate of the battery pack provided in one embodiment of the invention;
Fig. 10 is a schematic structural diagram of a second side plate of a battery pack provided in an embodiment of the invention;
Fig. 11 is a schematic structural diagram of a first angle of view of a first structure of a pressing strip of a battery pack provided in an embodiment of the invention;
Fig. 12 is a partial enlarged schematic diagram of a location C in Fig. 11;
Fig. 13 is a schematic structural diagram of a second angle of view of a first structure of a pressing strip of a battery pack provided in an embodiment of the invention;
Fig. 14 is a sectional schematic structural diagram of a first structure of a pressing strip of a battery pack provided in an embodiment of the invention;
Fig. 15 is a schematic structural diagram of connection of a pressing strip and a cross beam of a battery pack provided in an embodiment of the invention;
Fig. 16 is a partial enlarged schematic diagram of a location D in Fig. 15;
Fig. 17 is a schematic diagram of a second structure of a pressing strip of a battery pack provided in an embodiment of the invention;
Fig. 18 is a schematic structural diagram of an I-I section in Fig. 17;
Fig. 19 is a top view of a battery pack provided in another embodiment of the invention;
Fig. 20 is a schematic structural diagram of an E-E section in Fig. 19;
Fig. 21 is a schematic diagram of a partial section of Fig. 20;
Fig. 22 is an enlarged schematic diagram of a location F in Fig. 21;
Fig. 23 is a schematic structural diagram of mounting of a bottom plate, a frame body and a pressing strip provided in another embodiment of the invention;
Fig. 24 is a schematic structural diagram of a G-G axonometric section in Fig. 23;
Fig. 25 is a schematic structural diagram of mounting of a pressing strip and a cross beam provided in another embodiment of the invention;
Fig. 26 is a schematic structural diagram of mounting of a pressing strip and a cross beam under another angle of view provided in another embodiment of the invention; and
Fig. 27 is an enlarged schematic view of a location H in Fig. 26.

Reference numerals: 10-battery pack; 100-box body; 101-accommodating chamber; 103-first accommodating unit; 105-second accommodating unit; 110-first side plate; 120-second side plate; 121-cross beam mounting portion; 130-third side plate; 140-fourth side plate; 150-bottom plate; 151-first connecting hole; 152-first strip-shaped protrusion portion; 153-second strip-shaped protrusion portion; 154-first heat exchange flow channel; 155-second heat exchange flow channel; 156-substrate portion; 157-heat exchange through hole; 160-positioning slot; 200-cross beam; 201-end cross beam; 203-middle cross beam; 210-buffer groove; 211-bottom wall; 213-side wall; 220-connecting portion; 231-first rounded corner; 233-second rounded corner; 235-third rounded corner; 240-buffer pad; 250-first mounting groove; 251-first through hole; 260-second connecting hole; 270-spacer plate; 271-cavity; 280-third mounting groove; 290-supporting portion; 300-battery cell group; 310-battery cell; 311-strip-shaped protrusion; 400-pressing strip; 401-first pressing strip; 402-second pressing strip; 410-pressing strip mounting portion; 411-first pressing portion; 413-first plug-in connection portion; 415-second mounting groove; 417-second through hole; 419-avoidance groove; 420-pressing strip body portion; 421-second pressing portion; 423-second plug-in connection portion; 430-elastic insulating layer; 500-second fixing member; 600-busbar; 610-conducting portion; 700-insulating heat conduction layer.

### Detailed Description of the Embodiments

In order to make the objectives, technical solutions and advantages of the embodiments of the invention clearer, the technical solutions in the embodiments of the invention will be clearly and completely described below in combination with the drawings in the embodiments of the invention. Obviously, the described embodiments are merely a part, but not all, of the embodiments of the invention. Components of the embodiments of the invention generally described and illustrated in the drawings herein may be arranged and designed in a variety of different configurations.

Therefore, the following detailed description of the embodiments of the invention provided in the drawings is not intended to limit the scope of the invention, but merely represents selected embodiments of the invention. All other embodiments, obtained by those ordinary skilled in the art based on the embodiments in the invention without creative efforts, shall fall within the protection scope of the invention.

It should be noted that similar reference signs and letters indicate similar items in the following drawings. Therefore, once a certain item is defined in one drawing, it does not need to be further defined and explained in subsequent drawings.

In the description of the invention, it should be understood that orientation or location relationships indicated by terms "upper", "lower", "inside", "outside" and the like are orientation or location relationships shown on the basis of the drawings, or are orientation or position relationships conventionally placed when the product in the invention is in use, and are merely for the convenience of describing the invention and simplifying the description, but do not indicate or imply that referred devices or elements must have specific orientations or must be constructed and operated in specific orientations, and thus cannot be construed as limitations to the invention.

In addition, the terms "first", "second" and the like are only used for distinguishing description, and cannot be understood as indicating or implying relative importance.

It should be noted that features in the embodiments of the invention may be combined with each other in the case of conflict.

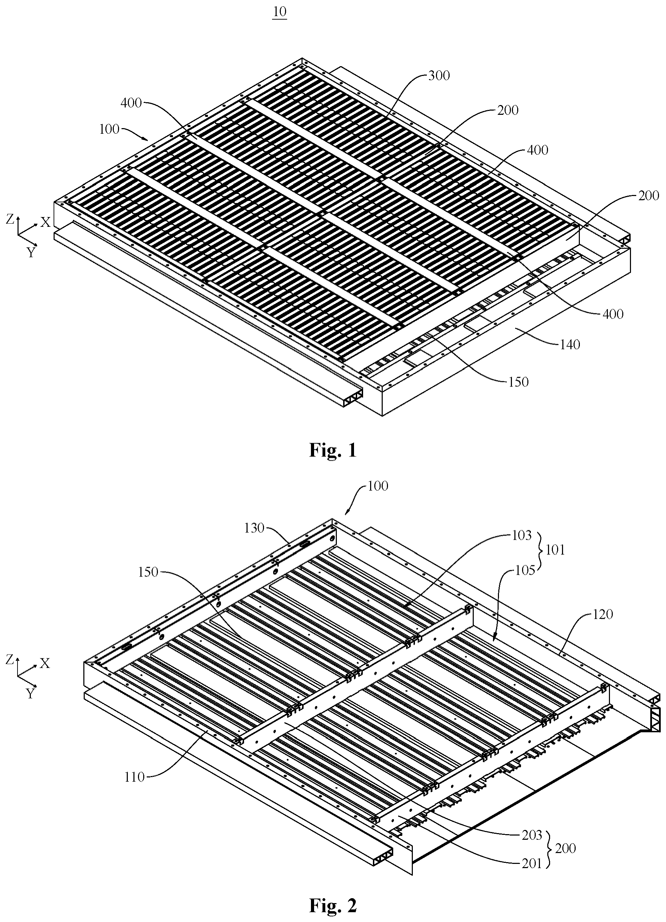

Referring to Figs. 1-3, an embodiment of the invention provides a battery pack 10, including a box body 100, a cross beam 200 and a battery cell group 300, a plurality of battery cell groups 300 are provided, wherein the box body 100 is provided with an accommodating chamber 101 having an opening at an end, the box body 100 includes a bottom plate 150 and a frame body formed by a plurality of side plates in an enclosing manner, a direction perpendicular to the bottom plate 150 is a first direction, and the frame body is fixedly connected to the bottom plate 150 along the first direction, that is, the plurality of side plates are fixedly connected to the bottom plate 150, respectively. The cross beam 200 is arranged in the accommodating chamber 101 to divide the accommodating chamber 101 into a plurality of accommodating units, a direction parallel to the bottom plate 150 is a second direction, and the cross beam 200 is perpendicular to the bottom plate 150 and extends along the second direction; and the plurality of battery cell groups 300 are arranged in the plurality of accommodating units along the second direction, a direction perpendicular to the cross beam 200 is a third direction, and the battery cell group 300 includes a battery cell 310, and a plurality of battery cells 310 are provided, the plurality of battery cells 310 are stacked along the third direction, wherein the cross beam 200 abuts against at least one end surface of the battery cell group 300. In this way, the assembly of the battery cell group 300 is facilitated, and the fixing and limiting of the battery cell group 300 are facilitated.

It can be understood that each two of the first direction, the second direction and the third direction are perpendicular to each other. The first direction is a Z direction, which is a height direction of the box body 100. A section of the bottom plate 150 is rectangular, there are four side plates, that is, a first side plate 110, a second side plate 120, a third side plate 130 and a fourth side plate 140, which are connected end to end, and the first side plate 110, the second side plate 120, the third side plate 130 and the fourth side plate 140 are fixedly connected to the bottom plate 150, respectively. Wherein the first side plate 110 and the second side plate 120 are arranged opposite to each other, and the third side plate 130 and the fourth side plate 140 are arranged opposite to each other. In the embodiment, the first side plate 110 and the second side plate 120 extend along a length direction of the box body 100, that is, the first side plate 110 and the second side plate 120 are spaced apart along the second direction, that is, an X direction. The third side plate 130 and the fourth side plate 140 extend along a width direction of the box body 100, that is, the third side plate 130 and the fourth side plate 140 are spaced apart along the third direction, that is, a Y direction. The cross beam 200 is arranged along the third direction, that is, the cross beam 200 is consistent with an arrangement direction of the third side plate 130. The cross beam 200 is arranged perpendicular to the bottom plate 150, the first side plate 110 and the second side plate 120, respectively. The cross beam 200 is arranged in parallel with the third side plate 130, and the cross beam 200 is located between the third side plate 130 and the fourth side plate 140.

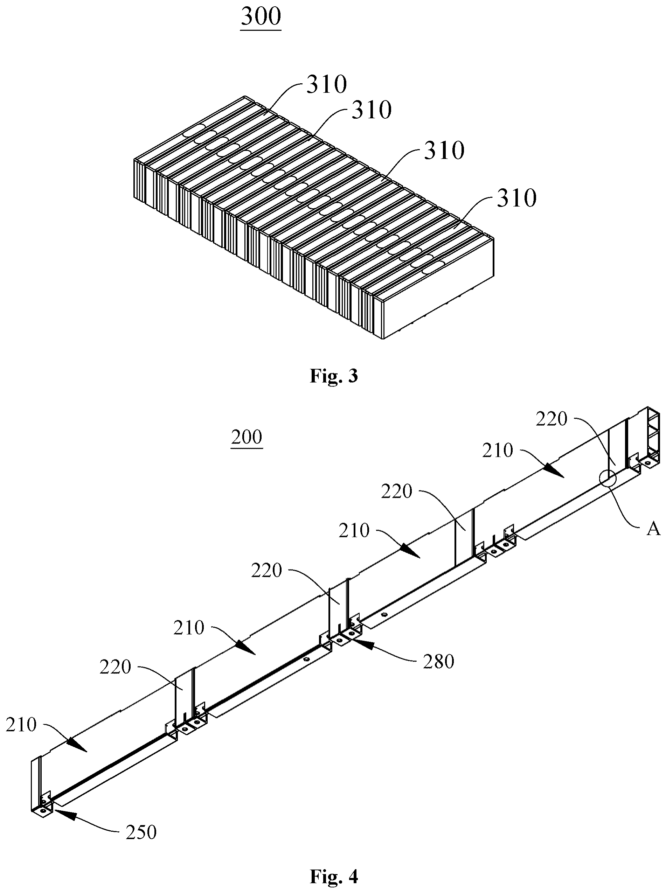

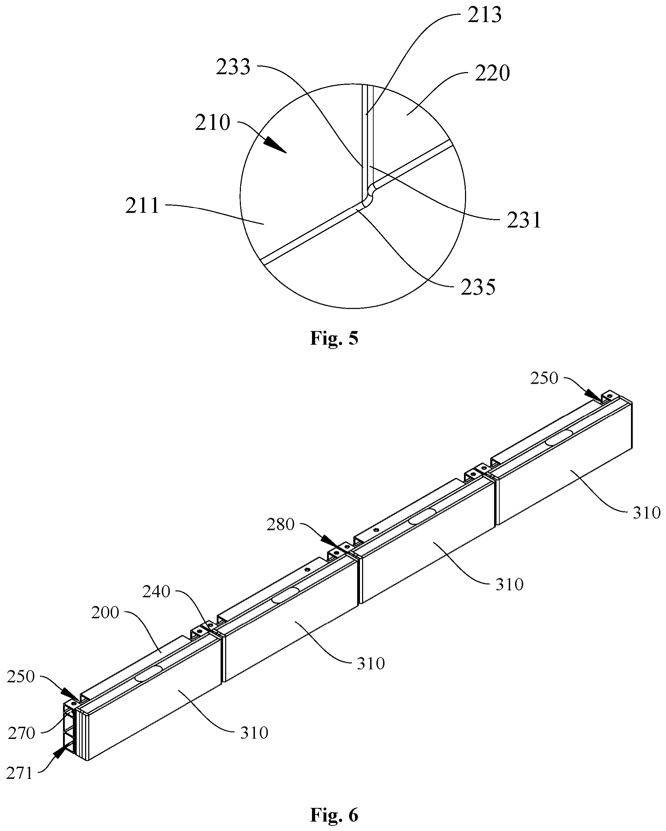

In combination with Fig. 4 and Fig. 5, on at least one side surface, facing the accommodating unit, of the cross beam 200 and/or the side plate that forms the accommodating unit in the enclosing manner and is installed along the third direction, a buffer groove 210 recessing along the third direction and a connecting portion 220 are arranged at intervals along the second direction; a plurality of buffer grooves 210 and a plurality of connecting portions 220 are provided, and the connecting portion 220 is configured for connecting two adjacent buffer grooves 210 of the plurality of buffer grooves 210; and a length of the buffer groove 210 along the second direction is less than a length of the battery cell 310, so that the battery cell 310 is able to be lapped on two adjacent connecting portions 220 of the plurality of connecting portions 220. It can be understood that, among side surfaces of the cross beam 200 that abut against the battery cell 310, at least one side surface is provided with the buffer groove 210; or, a side surface of the side plate that abuts against the battery cell 310 is provided with the buffer groove 210; or the cross beam 200 and the side plate are respectively provided with the buffer groove 210, so as to buffer the swelling of the battery cell 310. In an embodiment, a side, facing the cross beam 200, of the third side plate 130 is provided with the buffer groove 210; or a side, facing the third side plate 130, of the cross beam 200 is provided with the buffer groove 210, or a side, away from the third side plate 130, of the cross beam 200 is provided with the buffer groove 210; or two side surfaces of the cross beam 200 for abutting against the battery unit 310 are respectively provided with the buffer groove 210.

In the embodiment, one cross beam 200 is taken as an example for description. The side surface of the cross beam 200 is provided with the buffer groove 210 and the connecting portion 220 for connecting two adjacent buffer grooves 210. In an embodiment, at least one buffer groove 210 is penetrated along the first direction. In this way, it is conductive to improving the buffer effect. The buffer groove 210 includes a bottom wall 211 and a side wall 213, an intersection between the side wall 231 and the connecting portion 220 transitions smoothly; and/or, an intersection between the bottom wall 211 and the side wall 231 transitions smoothly. In an embodiment, a first rounded corner 231 is arranged at the intersection of the side wall 213 and the connecting portion 220, a second rounded corner 233 is arranged at the intersection of the bottom wall 211 and the side wall 213, and a radius of the first rounded corner 231 and a radius of the second rounded corner 233 are about 0.5 mm, respectively. A depth of the buffer groove 210 is about 1.5 mm. The buffer groove is penetrated along the first direction of the cross beam 200, that is, in the Z direction. In this way, smooth transition is used at the intersection of the bottom wall 211 and a top surface of the cross beam 200 (a side, away from the bottom plate 150, of the cross beam 200), and smooth transition is used at the intersection of the bottom wall 211 and a bottom surface of the cross beam 200 (a side, close to the bottom plate 150, of the cross beam 200). For example, a third rounded corner 235 is arranged at the intersection of the bottom wall 211 and the top surface of the cross beam 200, a fourth rounded corner is arranged at the intersection of the bottom wall 211 and the bottom surface of the cross beam 200, and a radius of the third rounded corner 235 and a radius of the fourth rounded corner are about 0.25 mm, respectively. Each edge of the buffer groove 210 is smoothly transited by using a rounded corner, therefore the stress concentration of the structure itself is able to be avoided, and a local damage to the battery cell 310 caused by sharp corners during a pressing process is also able to be prevented.

The cross beam 200 and the side plate may use a hollow structure, and a thickness of the side wall 213 on the side provided with the buffer groove 210 is about 4 mm, so as to ensure that the cross beam 200 and the side plate have sufficient structural strength and to reduce the weight of the overall structure. In the embodiment, the battery cell 310 is approximately a cuboid, the side surface, abutting against the cross beam 200, of the battery cell 310 is one of large surfaces of the battery cell 310, and the two ends of the large surface along the second direction are respectively lapped on two adjacent connecting portions 220, that is, a projection of the buffer groove 210 on the battery cell 310 along the third direction is completely located on the large surface of the battery cell 310. Moreover, a sum of contact areas between the two connecting portions 220 and the large surface accounts for about 10% of the area of the large surface, and the contact area between each connecting portion 220 and the large surface accounts for about 5% of the area of the large surface, so that a greater swelling buffer space is able to be provided for the battery cell 310, and thus the buffer effect is better. In addition, by forming the buffer groove 210 and using the hollow structure, the thermal insulation effect for the battery cell 310 is also able to be improved.

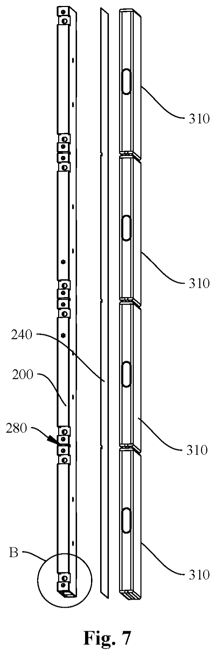

In combination with Fig. 6 and Fig. 7, in an embodiment, the battery pack 10 further includes a buffer pad 240. The buffer pad 240 is further arranged on the cross beam 200 and/or the side plate that forms the accommodating unit in the enclosing manner, and the buffer pad 240 is arranged on at least one side surface, facing the accommodating unit, of the cross beam 200 and/or the side plate. The buffer pad 240 is paved on the sides, facing the accommodating unit, of the cross beam 200 and the side plate. After the battery cell 310 is installed in the accommodating unit, the buffer pad 240 is located between the cross beam 200 and the battery cell 310; or the buffer pad 240 is located between the side plate and the battery cell 310; or buffer pads 240 are respectively arranged between the cross beam 200 and the battery cell 310, and between the side plate and the battery cell 310. It is easy to understand that, by arranging the buffer pad 240, the release of a swelling force of the battery cell 310 is facilitated, and the buffer effect is improved. Moreover, the buffer pad 240 is also able to implement insulated isolation between the cross beam 200 and the battery cell 310, and insulated isolation between the side plate and the battery cell 310, thereby improving the safety performance. In the embodiment, a thickness of the buffer pad 240 is about 0.25 mm. By arranging the buffer pad 240, the buffer effect is able to be further improved.

It can be understood that, by arranging the buffer groove 210 and the buffer pad 240, the swelling of the battery cell 310 abutting against the cross beam 200 and the side plate is able to be absorbed while ensuring that the cross beam 200 and the side plate are able to press the battery cell 310 and ensure the structural strength of the battery pack 10, thereby ensuring that the capacity of the battery cell 310 does not decrease rapidly, which is beneficial to prolonging the overall service life of the battery pack 10.

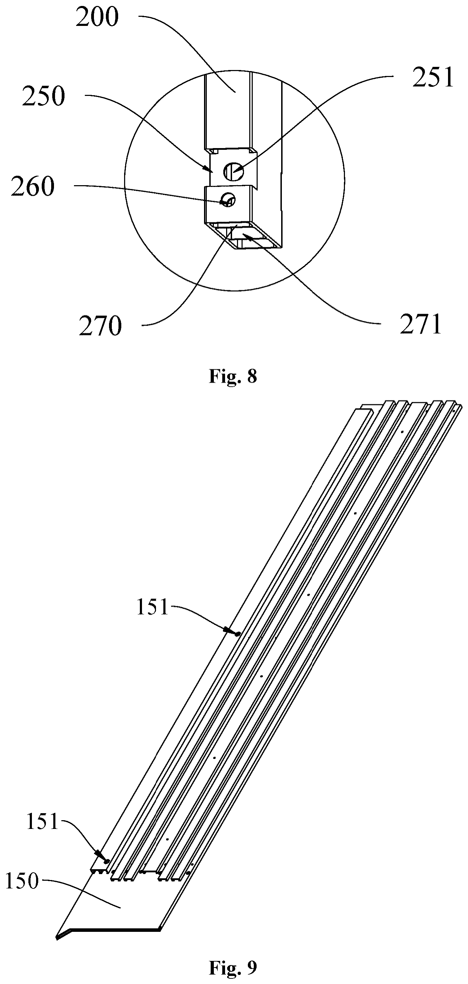

In combination with Fig. 8 and Fig. 9, in an embodiment, a first mounting groove 250 is provided in the top surface (the side surface, away from the bottom plate 150, of the cross beam 200) of the cross beam 200, a first through hole 251 passing through a groove bottom of the first mounting groove 250 is provided inside the cross beam 200, and a first connecting hole 151 corresponding to the first through hole 251 is provided in the bottom plate 150. The battery pack 10 further includes a first fixing member (not shown), and the first fixing member is configured to pass through the first through hole 251 to be connected to the first connecting hole 151, so as to fix the cross beam 200 to the bottom plate 150. The first fixing member is a bolt, a long stud, a pin or a rivet, and the like, which is not specifically limited herein. Of course, the bottom plate 150 and the cross beam 200 are also able to be connected in clamping, plug-in connection or other connection modes. In the embodiment, in the first mounting groove 250, a height of a top end of the first fixing member is lower than a height of the top surface of the cross beam 200, that is, the first fixing member does not protrude from the top surface of the cross beam 200, thereby not increasing the overall height of the box body 100 in the Z direction, and thus facilitating a reduction in the overall size of the box body 100 to save space.

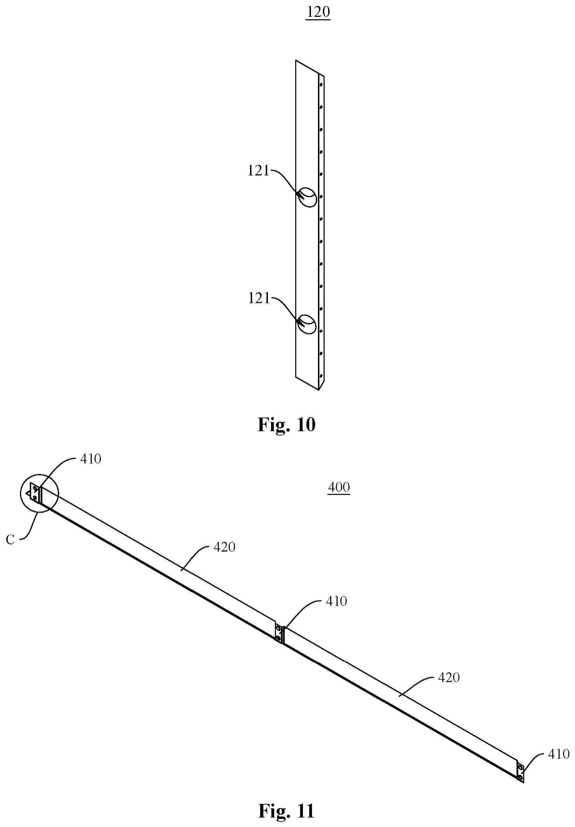

In combination with Fig. 10, in an embodiment, the side plate is provided with a cross beam mounting portion 121, and an end portion of the cross beam 200 is fixedly connected to the cross beam mounting portion 121. In the embodiment, the first side plate 110 and the second side plate are respectively provided with the cross beam mounting portion 121. A length of the cross beam 200 along the second direction is less than a spacing between the first side plate 110 and the second side plate 120, thereby facilitating the assembly of the cross beam 200. In an embodiment, the cross beam mounting portion 121 includes adjustment holes provided in the first side plate 110 and the second side plate 120, two ends of the cross beam 200 are respectively installed in the adjustment holes, the adjustment holes are a waist circular hole or a strip-shaped groove, and a length direction of the adjustment hole or the strip-shaped groove is the Y direction, so that during an assembly process, the cross beam 200 is able to move along the Y direction to press the battery cell 310. It can be understood that, the cross beam mounting portion 121 further includes a locking member, such as a locking screw. After the cross beam 200 presses the battery cell 310, the locking member is used for fixing the cross beam 200. Of course, the cross beam mounting portion 121 is also able to be arranged on the bottom plate 150, and the cross beam 200 is fixed connected to the cross beam mounting portion 121 on the bottom plate 150 via a bolt.

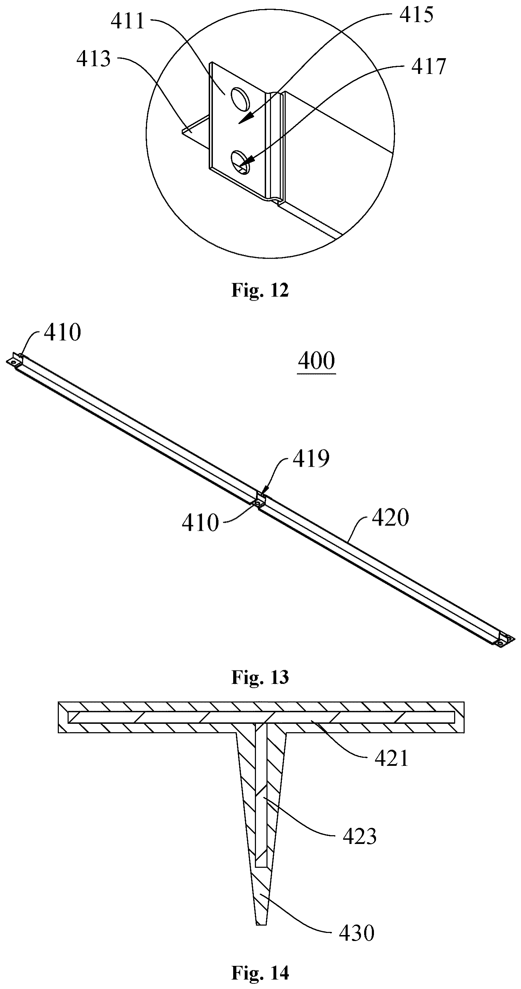

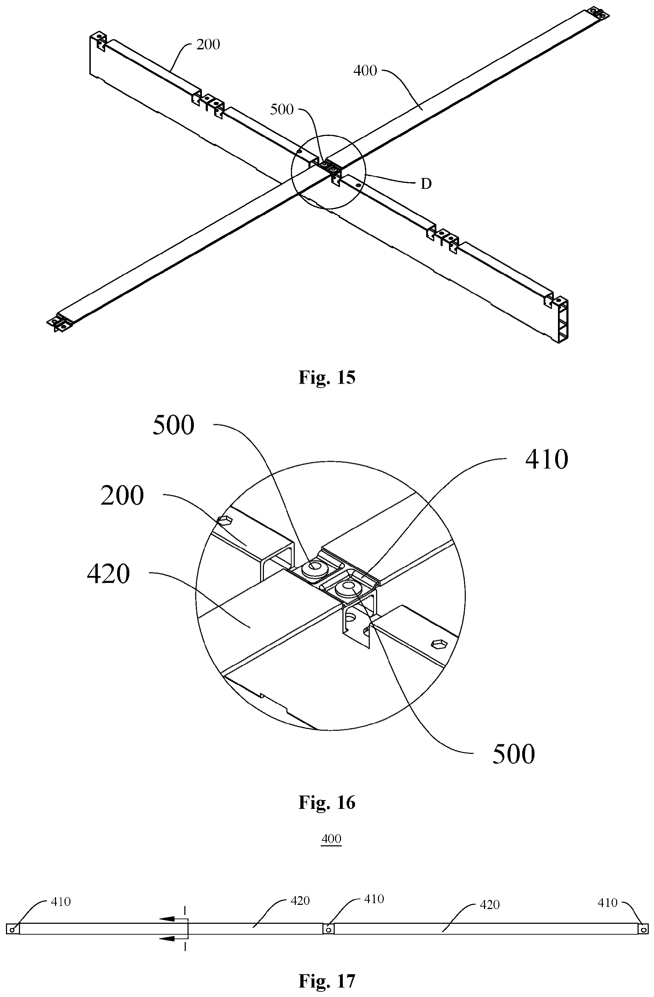

In combination with Figs. 11-18, the battery pack 10 further includes a pressing device, the pressing device includes a pressing strip 400, the pressing strip 400 includes pressing strip mounting portions 410 and a pressing strip body portion 420 arranged between two pressing strip mounting portions 410, the pressing strip body portion 420 extends along the third direction and is pressed on a top surface of the battery cell group 300, the pressing strip mounting portions 410 are fixed to the cross beam 200 and/or the side plate, and the pressing strip mounting portions 410 are arranged at the intersection of the pressing strip 400 and the side plate and/or the cross beam 200. In an embodiment, the pressing strip mounting portions 410 are arranged at the intersection of the pressing strip 400 and the side plate; or, the pressing strip mounting portions 410 are arranged at the joint of the pressing strip 400 and the cross beam 200; or, the pressing strip mounting portions 410 are respectively arranged at the intersection of the pressing strip 400 and the side plate and the joint of the pressing strip 400 and the cross beam 200. It is easy to understand that an arrangement direction of the pressing strip 400 is consistent with an arrangement direction of the first side plate 110 and the second side plate 120, there is one or more pressing strips 400, and a plurality of pressing strips 400 are provided in the embodiment, and the plurality of pressing strips 400 are arranged in parallel at intervals along the second direction. In this way, the pressing force of the pressing strip 400 on the battery cell 310 is more uniform, and the pressing effect is better.

It should be noted that the pressing device is also able to be a telescopic device installed on the frame body, a telescopic shaft of the telescopic device is provided with a pressure application plate, and the telescopic device drives the pressure application plate to approach or depart away from the battery cell 310, so as to clamp and fix the battery cell 310 or release the clamping of the battery cell 310. It should be further noted that the present solution does not define the specific structure of the pressing device, as long as the pressing device is able to clamp and fix the battery cell 310 between the pressing device and the bottom plate 150.

In an embodiment, the battery pack 10 further includes a second fixing member 500, the pressing strip mounting portion 410 includes a first pressing portion 411 and a first plug-in connection portion 413 perpendicular to the first pressing portion 411, a second mounting groove 415 is provided in the first pressing portion 411, a second through hole 417 is provided in a groove bottom of the second mounting groove 415, a second connecting hole 260 corresponding to the second through hole 417 is provided in the cross beam 200 and/or the side plate, and the second fixing member 500 passes through the second through hole 417 to be connected to the second connecting hole 260, so as to fix the pressing strip 400 on the cross beam 200 and/or the side plate. In the embodiment, the cross beam 200 includes an end cross beam 201 and a middle cross beam 203, one end of the pressing strip 400 is connected to the third side plate 130, the other end of the pressing strip 400 is connected to the end cross beam 201, and a middle of the pressing strip 400 is connected to the middle cross beam 203. In an embodiment, an upper surface of the second fixing member 500 is lower than an upper surface of the pressing strip body portion 420. In this way, the second fixing member 500 does not increase the height of the box body 100, thereby facilitating a reduction in the overall size to save space. It should be noted that there is one or more middle cross beams 203, and the middle cross beam 203 may also be omitted in some embodiments.

In an embodiment, in combination with Fig. 8, a plurality of spacer plates 270 for dividing an inner cavity 271 of the cross beam 200 into a plurality of cavities 271 are arranged inside the cross beam 200, the second connecting hole 260 penetrates through the top surface of the cross beam 200 and the spacer plate 270 adjacent to the top surface of the cross beam 200, and the second fixing member 500 is a riveting screw. By using the riveting screw, the structure is simple, the mounting is convenient, the volume is small, and the connection is reliable.

In the embodiment, a second mounting groove 415 is provided in each first pressing portion 411, and one or more second through holes 417 is provided in the groove bottom of each second mounting groove 415. In the embodiment, two second through holes 417 are provided in the groove bottom of each second mounting groove 415, wherein a recess depth of the second mounting groove 415 is about 3 mm, and an up and down deviation is about 0.2 mm, so that the pressing strip 400 is able to be tightly attached to the cross beam 200 or the side plate.

In an embodiment, the pressing strip body portion 420 includes a second pressing portion 421 and a second plug-in connection portion 423 perpendicular to the second pressing portion 421, two ends of the top surface of the battery cell 310 along the second direction are shoulders of the battery cell 310, the second pressing portion 421 is pressed on shoulders of the battery cell 310, the second plug-in connection portion 423 is plugged into a gap between two adjacent battery cell groups 300, and/or the second plug-in connection portion 423 is plugged into a gap between the battery cell group 300 and the side plate. By arranging the second plug-in connection portion 423, the battery cell 310 is able to be better fixed. In the embodiment, a thickness of the second plug-in connection portion 423 gradually decreases along a direction facing away from the second pressing portion 421, and a size of the gap between the two adjacent battery cell groups 300 is less than a maximum thickness of the second plug-in connection portion 423 and is greater than a minimum thickness thereof, and a size of the gap between the battery cell group 300 and the side plate is less than the maximum thickness of the second plug-in connection portion 423 and is greater than the minimum thickness thereof. In this way, a thickness of an end, away from the second pressing portion 421, of the second plug-in connection portion 423 is smaller and is less than the gap, which is beneficial to plugging the second plug-in connection portion 423 into the gap, and the end with the smaller thickness plays a guiding role during the plugging process. Meanwhile, since the maximum thickness of the second plug-in connection portion 423 is greater than the gap, during the process of inserting the second plug-in connection portion 423 into the gap, the battery cell 310 is able to be better extruded, so that the fixing and limiting effects for the battery cell 310 are better, and the abutment is more reliable; and the clamping effect for the battery cell 310 along the second direction is better.

In an embodiment, a section of the pressing strip body portion 420 along the second direction is L-shaped and/or T-shaped. In the embodiment, for the pressing strip 400 with a T-shaped section along the second direction, the second plug-in connection portion 423 thereof is plugged into the gap between two adjacent battery cell groups 300. For the pressing strip 400 with an L-shaped section along the second direction, the second plug-in connection portion 423 thereof is plugged into the gap between the battery cell group 300 and the side plate.

In the embodiment, the frame body is fixedly connected to the bottom plate 150. When the pressing strip 400 applies a pressure, the battery cell 310 is pressed between the bottom plate 150 and the pressing strip 400.

In the embodiment, the pressing strip 400 include a first pressing strip 401, and at least two first pressing strips 401 are provided; the two first pressing strips 401 are respectively pressed on two opposite side edges of the top surface of the battery cell group 300, and the first pressing strips 401 are parallel to an arrangement direction of the plurality of battery cells 310. At this time, two opposite side edges of the battery cell group 300 are tightly pressed, so that the battery cell group 300 is tightly pressed between two first pressing strips 401 and the bottom plate 150. It should be further noted that the first pressing strip 401 that is pressed on the middle of the top of the battery cell group 300 is also able to be arranged between two first pressing strips 401, so as to improve the effect of pressing and fixing the battery cell group 300, that is, there are three, four or more first pressing strips 401.

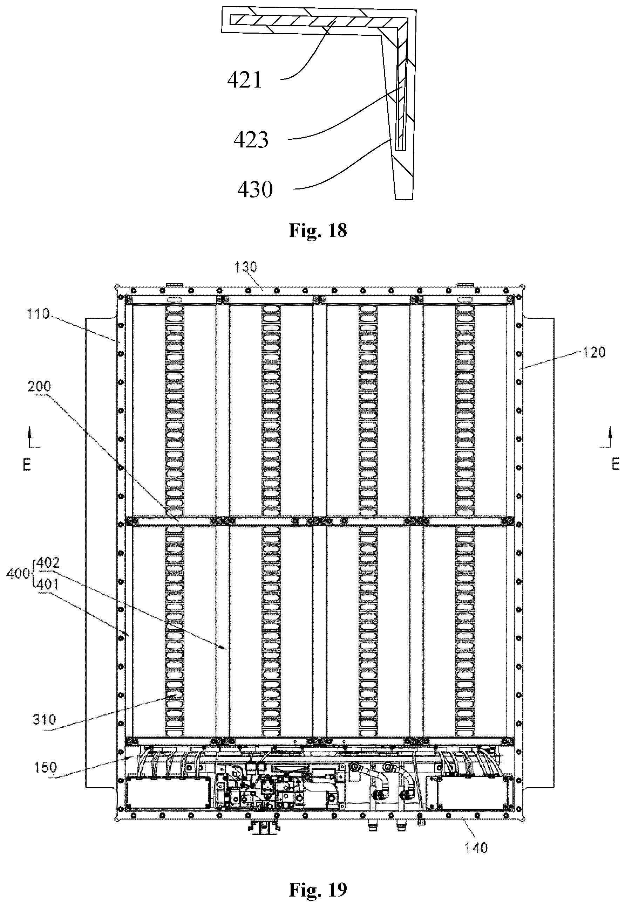

In an embodiment, as shown in Figs. 19-21, when the battery cell group 300 is composed of a plurality of columns of battery cells 310, the pressing strip 400 further includes a second pressing strip 402, and at least one second pressing strip 402 is provided; and the second pressing strip 402 is pressed on the top surface, away from the bottom plate 150, of the battery cell group 300. Since the locations to be pressed and fixed are different, a shape of the first pressing strip 401 is able to be the same as or different from a shape of the second pressing strip 402. In the embodiment, the shape of the second pressing strip 402 is different from the shape of the first pressing strip 401.

In an embodiment, the first pressing strip 401 and the second pressing strip 402 are both detachably installed on the frame body. When the first pressing strip 401 and the second pressing strip 402 are fixed to the frame body, both the first pressing strip 401 and the second pressing strip 402 apply a pressure to the battery cell 310, so that the battery cell 310 is clamped and fixed between the pressing strip 400 and the bottom plate 150. When the first pressing strip 401 and the second pressing strip 402 are disassembled, the battery cell 310 to be maintained is able to be easily taken out, and the bottom plate 150 plays a role in supporting the battery cell 310.

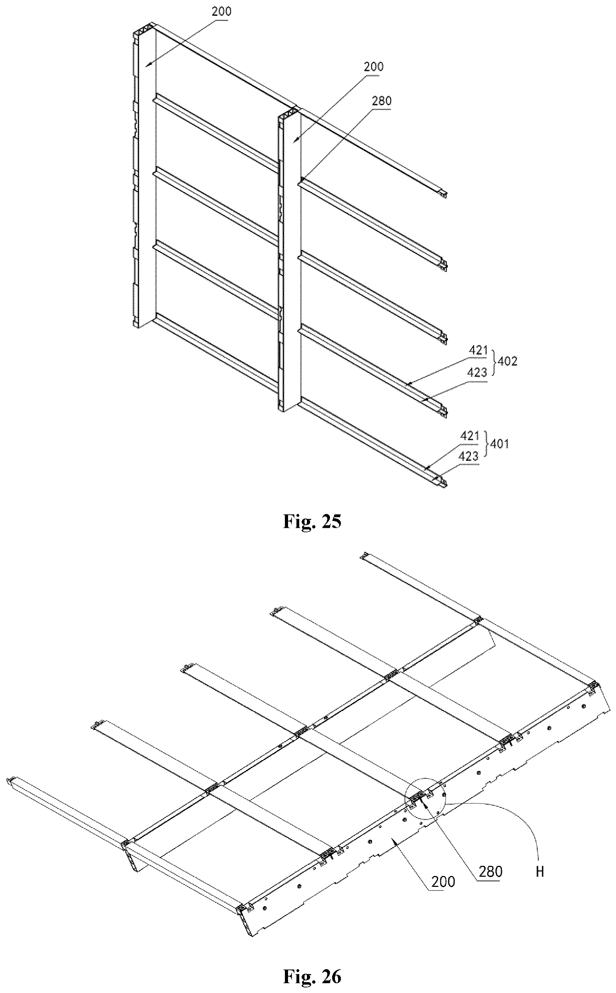

In an embodiment, as shown in Fig. 25, the section of the pressing strip body portion 420 of the first pressing strip 401 along the second direction is L-shaped; the second pressing portion 421 of the pressing strip body portion 420 is pressed on the top surface, and the second plug-in connection portion 423 is attached to the side surface of the battery cell group 300. It should be noted that the second pressing portion 421 applies a pressure from the top surface, so that the battery cell group 300 is clamped and fixed between the pressing strip 400 and the bottom plate 150, and the second plug-in connection portion 423 is attached to the side surface of the battery cell group 300, the arrangement direction of the plurality of battery cells 310 is standardized, so that deviations in the locations of the battery cells 310 in the battery cell group 300 are able to be effectively avoided, and thus the plurality of battery cells 310 are arranged more orderly. The plurality of in the technical solution refers to two or more.

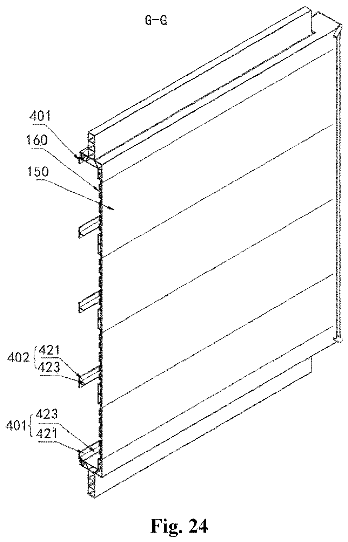

In an embodiment, as shown in Fig. 24 and Fig. 25, the section of the pressing strip body portion 420 of the second pressing strip 402 along the second direction is T-shaped; and the battery cell group 300 includes a plurality of sub-modules arranged at intervals. It should be noted that one column of the plurality of battery cells 310 arranged in the linear direction constitutes a sub-module. The second plug-in connection portion 423 of the second pressing strip 402 separates two groups of adjacent sub-modules, and two ends of the second pressing portion 421 are pressed on tops of the two groups of adjacent sub-modules, that is, at this time, two opposite side edges of each column of the plurality of battery cells 310 are pressed, so that each battery cell 310 is able to achieve a good fixing effect. In an embodiment, the side surface of the battery cell 310 in the sub-module abuts against the side surface of the second plug-in connection portion 423.

It should be noted that in some embodiments, the first plug-in connection portion 413 is able to be omitted, and the first pressing portion 411 is directly fixedly connected to the cross beam 200 via the riveting screw; or, the first pressing portion 411 is directly fixedly connected to the third side plate 130 via the riveting screw; or, each pressing strip 400 is provided with a plurality of first pressing portions 411, and the plurality of first pressing portions 411 are respectively connected to the cross beam 200 and the side plate. In the embodiment, one pressing strip 400 is provided with three first pressing portions 411, the first one of which is connected to the third side plate 130, the second one of which is connected to the middle cross beam 203, and the third one is connected to the end cross beam 201. It can be understood that the disposition locations and the number of the first pressing portions 411 are related to the disposition locations of the cross beams 200 and the number of the cross beams 200.

In an embodiment, in a case where the first plug-in connection portion 413 is provided, a third mounting groove 280 is provided in the cross beam 200 and/or the side plate, a location of the third mounting groove 280 corresponds to a location of the first plug-in connection portion 413, and the first plug-in connection portion 413 is in interference fit with the third mounting groove 280 to limit the pressing strip 400. It is easy to understand that the first plug-in connection portion 413 and the cross beam 200 or the side plate are also able to be connected in a clamping or plug-in connection manner, which is not specifically limited herein.

In an embodiment, a plurality of spacer plates 270 for dividing the inner cavity 271 of the cross beam 200 into a plurality of cavities 271 are arranged inside the cross beam 200, and a bottom surface of the third mounting groove 280 is located on the spacer plate 270 adjacent to the top surface of the cross beam 200. In this way, the spacer plate 270 is able to support the first plug-in connection portion 413.

Of course, in some embodiments, the third mounting groove 280 is also able to be omitted, instead, an avoidance groove 419 is provided in a cooperative mounting location of the side plate and/or the cross beam 200 on the pressing strip mounting portion 410, so that the cross beam 200 and/or the side plate is arranged in the avoidance groove 419. The cross beam 200 is in interference fit with the avoidance groove 419, or the side plate is in interference fit with the avoidance groove 419, or the cross beam 200 and the side plate are in interference fit with the avoidance groove 419, respectively.

In an embodiment, an outer surface of the pressing strip body portion 420 is covered with an elastic insulating layer 430. The elastic insulating layer 430 implements electrical insulation between the pressing strip body portion 420 and the battery cell 310, so as to improve the safety of the battery pack 10. Specifically, an overall thickness of the elastic insulating layer 430 and the second plug-in connection portion 423 gradually decreases along a direction facing away from the second pressing portion 421, a maximum value of the overall thickness of the second plug-in connection portion 423 and the elastic insulating layer 430 is greater than a size of the gap between the two adjacent battery cell groups 300, and a minimum value thereof is less than the size of the gap between the two adjacent battery cell groups 300, and the maximum value of the overall thickness of the second plug-in connection portion 423 and the elastic insulating layer 430 is greater than a size of the gap between the battery cell group 300 and the side plate, and the minimum value thereof is less than the size of the gap between the battery cell group 300 and the side plate. The elastic insulating layer 430 is able to generate elastic deformation when the pressing strip 400 is extruded. In this way, it is beneficial to improving the assembly efficiency and the fixing effect, so that the fixing of the battery cell 310 is more stable, and the clamping effect for the battery cell 310 along the second direction is better.

Along the third direction, a distance between the elastic insulating layer 430 and the pressing strip mounting portion 410 is about 3 mm, which facilitates the molding of the second mounting groove 415. In the embodiment, the pressing strip 400 is made of a metal material, such as steel or an aluminum alloy, and thus a sufficient pressing force is able to be provided. The elastic insulating layer 430 is made of rubber, such as silicone rubber, polyurethane rubber, etc. The elastic insulating layer 430 is also able to be made of plastic, such as polytetrafluoroethylene, PC, PP, PA, etc. The elastic insulating layer 430 is able to be bonded to the pressing strip 400 by an adhesive, or a metal is embedded in an injection molding manner. The elastic insulating layer 430 is also able to be coated on the surface of the pressing strip 400 by a thermal shrinkage process.

In an embodiment, the pressing strip mounting portion 410 and the pressing strip body portion 420 are integrally formed, such as by casting and extrusion molding. In the embodiment, the section of the pressing strip mounting portion 410 along the second direction is the same as the section of the pressing strip body portion 420 along the second direction. Of course, in some embodiments, the pressing strip mounting portion 410 and the pressing strip body portion 420 are able to be lapped and then welded, or glued, or in other manners. Or, the first pressing portion 411 and the first plug-in connection portion 413 are able to be lapped and then welded, or glued, or in other manners, and the second pressing portion 421 and the second plug-in connection portion 423 are able to be lapped and then welded, or glued, or in other manners.

The assembly process of the battery pack 10 provided in the embodiments of the invention is as follows:
it is taken as an example that the cross beam 200 includes one middle cross beam 203 and one end cross beam 201, the two cross beams 200 divide the accommodating chamber 101 of the box body 100 into two accommodating units, that is, a first accommodating unit 103 located between the third side plate 130 and the middle cross beam 203, and a second accommodating unit 105 located between the middle cross beam 203 and the end cross beam 201.

Firstly, the battery cells 310 are stacked along the third direction to form the battery cell groups 300, and then the battery cell groups 300 are stacked along the second direction to fill the first accommodating unit 103; the middle cross beam 203 is moved towards the side close to the third side plate 130, so as to press the battery cell groups 300; then, the middle cross beam 203 is fixed after the battery cell groups 300 are pressed; the battery cell groups 300 are stacked along the second direction to fill the second accommodating unit 105; next, the end cross beam 201 is moved towards the side close to the third side plate 130, so as to press the battery cell groups 300; the end cross beam 201 is fixed after the battery cell groups 300 are pressed; then, the pressing strips 400 are arranged along the third direction, plugged into the gaps between adjacent battery cell groups 300, and plugged into the gaps between the battery cell groups 300 and the side plates; and the pressing strip 400 and the cross beam 200 are locked, and the pressing strip 400 and the side plates are locked to complete the fixing and limiting of the battery cell groups 300.

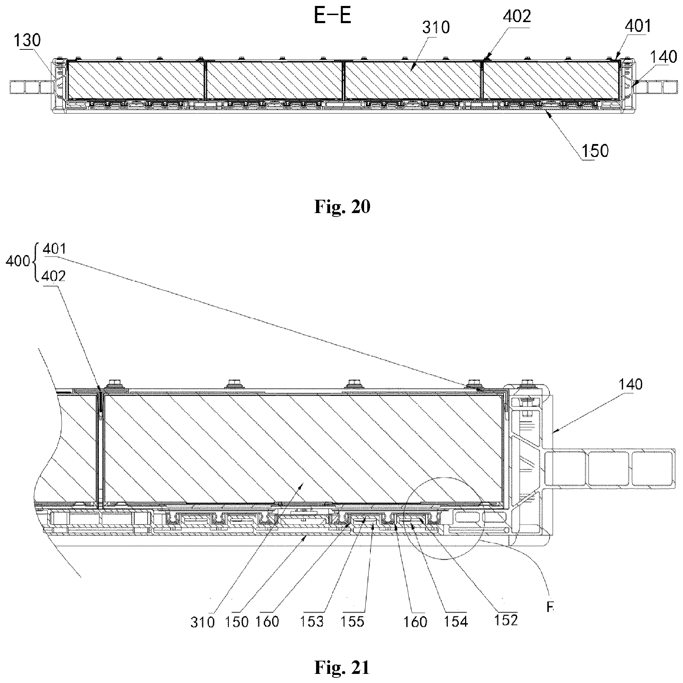

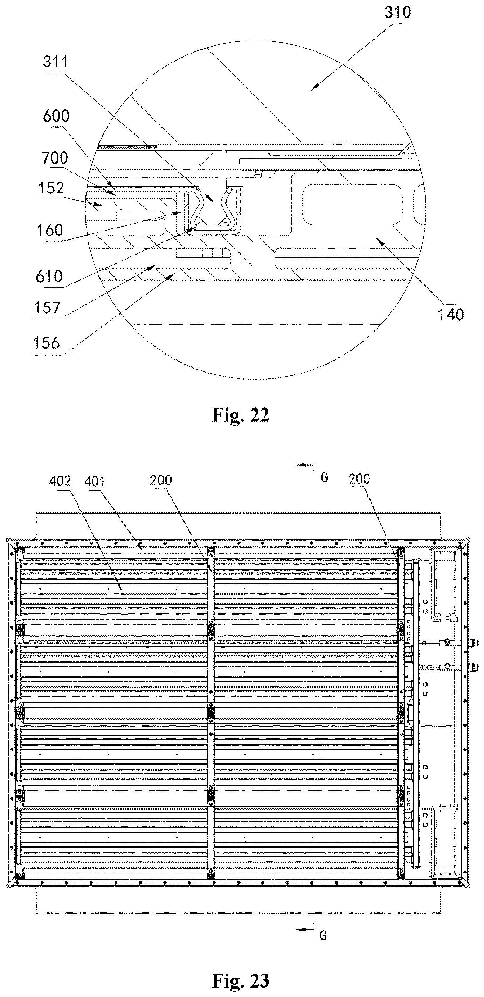

In another embodiment, referring to Fig. 21 to Fig. 22, and Fig. 24, a positioning slot 160 is provided in the bottom plate 150, and an electrode terminal of the battery cell 310 is able to be plugged into the positioning slot 160; and the pressing strip 400 is used for applying a pressure to the battery cell 310, so that the battery cell 310 is clamped and fixed between the pressing strip 400 and the bottom plate 150.

In the embodiment, when the battery cell 310 is installed, the electrode terminal of the battery cell 310 is able to be better positioned by the positioning slot 160, so that the battery cell 310 is able to be more easily positioned at a desired mounting location, thereby facilitating an improvement in the mounting speed of the battery cell 310; in addition, when a single battery cell 310 on the bottom plate 150 needs to be disassembled, the bottom plate 150 or the pressing strip 400 is able to be removed, and then the battery cell 310 to be maintained or replaced is taken out separately, and other adjacent battery cells 310 are not affected during the process of taking out the battery cell 310; and in addition, it is unlikely to deform the bottom plate 150 during the process of disassembling the single battery cell 310, that is, it is unlikely to damage the bottom plate 150.

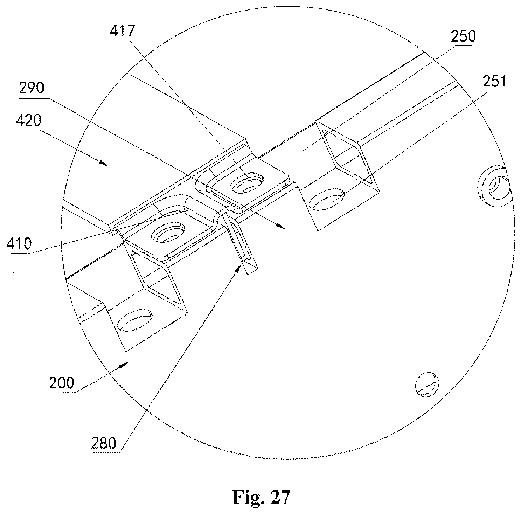

In the embodiment, as shown in Fig. 27, two opposite sides of the third mounting groove 280 are both provided with a supporting portion 290 for supporting the first pressing portion 411, the second connecting hole 260 is provided in the supporting portion 290, and the second through hole 417 corresponding to the second connecting hole 260 is provided in the second pressing portion 421.

Specifically, when the second plug-in connection portion 423 is installed in the third mounting groove 280, a threaded fastener sequentially passes through the second through hole 417 and the second connecting hole 260, so as to fix the second pressing portion 421 to the supporting portion 290. When the second pressing portion 421 is fixed to the supporting portion 290, the second pressing portion 421 applies a pressure to the battery cell 310 at this time, so that the battery cell 310 is fixed between the second pressing portion 421 and the bottom plate 150.

In an embodiment, the battery pack further includes a busbar 600 installed on the bottom plate 150 in an insulating manner, the busbar 600 is provided with a conducting portion 610 for conducting the electrode terminal, the conducting portion 610 is located in the positioning slot 160, and the busbar 600 is fixedly connected to the bottom plate 150; and when the electrode terminal is plugged into the positioning slot 160, the conducting portion 610 conducts the electrode terminal.

It should be noted that the conducting portion 610 is located in the positioning slot 160, but other parts of the busbar 600 are able to be not arranged in the positioning slot 160. The conducting portion 610 only needs to achieve the effect of conducting the electrode terminal, and the conducting portion 610 is able to be set to be various shapes, for example, a columnar shape, a strip shape, a block shape, a cone shape, etc. In an embodiment, a plug-in connection groove is provided in the conducting portion 610, when the electrode terminal of the battery cell 310 is plugged into the positioning slot 160, the conducting portion 610 is in plug-in connection with the electrode terminal via the plug-in connection groove, and the conducting portion 610 also has the function of positioning the electrode terminal.

In an embodiment, the positioning slot 160 is a trench; and the plurality of battery cells 310 are arranged along an extension direction of the trench, and a plurality of conducting portions 610 are arranged at intervals in the trench at locations corresponding to the electrode terminals of the battery cells 310. When the plurality of battery cells 310 are installed on the bottom plate 150, one electrode terminal of each battery cell 310 at least conducts one conducting portion 610.

In an embodiment, the bottom plate 150 is provided with a first strip-shaped protrusion portion 152 and a second strip-shaped protrusion portion 153, which are parallel to each other, and the first strip-shaped protrusion portion 152 and the second strip-shaped protrusion portion 153 form the trench; and a first heat exchange flow channel 154 is arranged inside the first strip-shaped protrusion portion 152, and a second heat exchange flow channel 155 is arranged inside the second strip-shaped protrusion portion 153.

It should be noted here that the shape of the first strip-shaped protrusion 152 and the shape of the second strip-shaped protrusion 153 are able to be specifically set according to the shape of the busbar 600, so that the busbar 600 is able to be more conveniently installed on the bottom plate 150. In addition, the shape of the first strip-shaped protrusion portion 152 is able to be the same as the shape of the second strip-shaped protrusion portion 153, and the shape of the first strip-shaped protrusion portion 152 is also able to be different from the shape of the second strip-shaped protrusion portion 153. In an embodiment, the section of the first strip-shaped protrusion portion 152 and the section of the second strip-shaped protrusion portion 153, which are perpendicular to the extension direction of the trench, are both rectangular.

In addition, it should be noted that the heat exchange effect of the first strip-shaped protrusion portion 152 is able to be effectively improved by arranging the first heat exchange flow channel 154, and the heat exchange effect of the second strip-shaped protrusion portion 153 is able to be effectively improved by arranging the second heat exchange flow channel 155. It should also be noted that the first heat exchange flow channel 154 and the second heat exchange flow channel 155 are both used for circulating a heat exchange medium, and the heat exchange medium is able to be a liquid medium or a gaseous medium. For example, when it is necessary to cool the battery cell 310, a liquid medium with a lower temperature, such as water, is able to be circulated in the first heat exchange flow channel 154 and the second heat exchange flow channel 155; and when it is necessary to heat the battery cell 310, a liquid medium with a higher temperature, such as hot water, is able to be circulated in the first heat exchange flow channel 154 and the second heat exchange flow channel 155.

In an embodiment, the first heat exchange flow channel 154 and the second heat exchange flow channel 155 are parallel to the trench, so that the cooling effect for the plurality of battery cells 310 arranged along the trench is more uniform.

In an embodiment, the bottom plate 150 further includes a substrate portion 156, and the first strip-shaped protrusion portion 152 and the second strip-shaped protrusion portion 153 are both arranged on the substrate portion 156, and a portion of a plate surface of one side of the substrate portion 156 forms the groove bottom of the trench.

In order to further increase the cooling effect of the bottom plate 150 for the battery cell 310, a heat exchange through hole 157 parallel to the first heat exchange flow channel 154 is provided inside the substrate portion 156, and the heat exchange through hole 157 at least partially extends below the groove bottom of the trench. A liquid heat exchange medium or a gaseous heat exchange medium is able to circulate in the heat exchange through hole 157.

In an embodiment, the conducting portion 610 is U-shaped to form a U-shaped groove for plug-in connection with the electrode terminal; and groove walls on two opposite sides of the U-shaped groove both protrude at the middle to form clamping protrusions for clamping the electrode terminal, so that the conducting connection effect of the electrode terminal and the conducting portion 610 is more stable.

In an embodiment, in order to further improve the connection effect of the electrode terminal and the conducting portion 610, the electrode terminal is provided with a plurality of strip-shaped protrusions 311 in parallel, a plurality of plug-in connection grooves in plug-in connection with the plurality of strip-shaped protrusions 311 are correspondingly provided in the conducting portion 610, and the plurality of strip-shaped protrusions 311 are plugged into the plurality of plug-in connection grooves, so as to realize the conducting connection of the electrode terminal and the conducting portion 610. In addition, the greater the number of the plurality of strip-shaped protrusions 311 is, the more conducive is it to increasing the area of the conducting connection, so that the conducting effect of the electrode terminal and the conducting portion 610 is better, which is beneficial to reducing the heat generation amount of the battery pack.

In an embodiment, the positioning slot 160 is used for positioning the battery cell 310, and the shape of the positioning slot 160 is able to be specifically set according to the shape of the electrode terminal of the battery cell 310. For example, the positioning slot 160 is able to be set to be a rectangular groove, a V-shaped groove, a spherical groove, or a conical groove.

In an embodiment, the bottom plate 150 is located on one side of the bottom of the battery cell 310, and the pressing strip 400 is located on one side of the top of the battery cell 310; and when the bottom plate 150 is located on one side of the bottom of the battery cell 310, the battery cell 310 remains the state of being plugged into the positioning slot 160 due to its own gravity, and at this time, the pressing strip 400 applies a pressure to the battery cell 310 from the top.

The bottom plate 150 is located on one side of the top of the battery cell 310, and the pressing strip 400 is located on one side of the bottom of the battery cell 310. When the bottom plate 150 is located on one side of the top of the battery cell 310, the pressing strip 400 applies a pressure to the battery cell 310 from the bottom of the battery cell 310, so that the electrode terminal remains the state of being plugged into the positioning slot 160, and the battery cell 310 is clamped and fixed between the pressing strip 400 and the bottom plate 150.

In an embodiment, the bottom plate 150 is provided with an insulating heat conduction layer 700, and the battery cell 310 is pressed on the insulating heat conduction layer 700. The insulating heat conduction layer 700 separates the battery cell 310 from the bottom plate 150 in an insulating manner. The bottom plate 150 is able to be a metal plate or a non-metal plate, and in an embodiment, an aluminum plate or a copper plate with a better heat conduction effect is used.

The embodiments of the invention further provide an electric device, including the battery pack 10 in any of foregoing embodiments. The electric device is various vehicles or power equipment, and the battery pack 10 is used for providing power for the vehicle. Since the battery pack 10 uses the cross beam 200 and the pressing strip 400 to press and limit the battery cell group 300, the assembly process is able to be simplified, the production efficiency is improved, the space utilization rate is improved, and the service life of the whole battery pack 10 is prolonged, so that the production efficiency and the product quality of the electric device are able to be improved, and the service life of the electric device is prolonged.

In summary, the battery pack 10 and the electric device provided in the embodiments of the invention have beneficial effects in the following aspects:
according to the battery pack 10 provided in the embodiments of the invention, the box body 100 is provided with the accommodating chamber 101, and the cross beams 200 are arranged in the accommodating chamber 101 to divide the accommodating chamber 101 into a plurality of accommodating units. The battery cell group 300 is arranged in each accommodating unit, and the cross beam 200 abuts against the battery cell group 300. In this way, the cross beam 200 is able to better abut against the battery cell group 300 to effectively limit and fix the battery cell group, so that the stability of the battery cell group 300 is better. Moreover, the assembly process of the battery cell group 300 is simplified, so that the assembly is more convenient and faster, thereby facilitating an improvement in the assembly efficiency. In addition, by arranging the buffer groove 210 and the buffer pad 240, the release of the swelling force of the battery cell 310 is facilitated, and an improvement in the clamping effect for the battery cell group 300 is facilitated by arranging the pressing strip 400, thereby facilitating to prolong the service life of the battery pack 10; by arranging the plurality of pressing strips 400 and arranging the plurality of pressing strips 400 in parallel at intervals along the second direction, the pressing force of the pressing strips 400 for the battery cell 310 is more uniform, and the pressing effect is thus better; further, when the battery cell 310 is installed, the electrode terminal of the battery cell 310 is able to be better positioned by the positioning slot 160, so that the battery cell 310 is able to be more easily positioned at a desired mounting location, thereby facilitating an improvement in the mounting speed of the battery cell 310; in addition, when a single battery cell 310 on the bottom plate 150 needs to be disassembled, the bottom plate 150 or the pressing strip 400 is able to be removed, and then the battery cell 310 to be maintained or replaced is taken out separately, and other adjacent battery cells 310 are not affected during the process of taking out the battery cell 310; and in addition, it is unlikely to deform the bottom plate 150 during the process of disassembling the single battery cell 310, that is, it is unlikely to damage the bottom plate 150.

The electric device provided in the embodiments of the invention includes the battery pack 10 as described above, and the battery cell group 300 is effectively limited and fixed, so that the stability of the battery pack 10 is better, and moreover, the assembly process is simplified. Therefore, it is beneficial to improving the stability, the product quality and the production efficiency of the whole electric device.

The above descriptions are only specific embodiments of the invention, but the protection scope of the invention is not limited thereto, and any changes or substitutions, which may be easily conceived of by those skilled in the art within the technical scope disclosed in the invention, shall fall within the protection scope of the invention. Therefore, the protection scope of the invention shall be subject to the protection scope of the claims.

## Claims

1. A battery pack, comprising:
a box body (100), wherein the box body (100) is provided with an accommodating chamber (101) having an opening at an end, the box body (100) comprises a bottom plate (150) and a frame body formed by a plurality of side plates in an enclosing manner, a direction perpendicular to the bottom plate (150) is a first direction, and the plurality of side plates are fixedly connected to the bottom plate (150) along the first direction;
a cross beam (200), wherein the cross beam (200) is arranged in the accommodating chamber (101) to divide the accommodating chamber (101) into a plurality of accommodating units, a direction parallel to the bottom plate (150) is a second direction, and the cross beam (200) is perpendicular to the bottom plate (150) and extends along the second direction; and
a battery cell group (300), wherein a plurality of battery cell groups (300) are provided, and the plurality of battery cell groups (300) are arranged in the plurality of accommodating units along the second direction, a direction perpendicular to the cross beam (200) is a third direction, and the battery cell group (300) comprises a battery cell (310), and a plurality of battery cells (310) are provided, the plurality of battery cells (310) are stacked along the third direction,
wherein the cross beam (200) abuts against at least one end surface of the battery cell group (300).

2. The battery pack as claimed in claim 1, wherein on at least one side surface, facing the accommodating unit, of the cross beam (200) and/or the side plate that forms the accommodating unit in the enclosing manner and is installed along the second direction, a buffer groove (210) recessing along the third direction and a connecting portion (220) are arranged at intervals along the second direction; a plurality of buffer grooves (210) and a plurality of connecting portions (220) are provided, and the connecting portion (220) is configured for connecting two adjacent buffer grooves (210) of the plurality of buffer grooves (210); and a length of the buffer groove (210) along the second direction is less than a length of the battery cell, and the battery cell is able to be lapped on two adjacent connecting portions (220) of the plurality of connecting portions (220).

3. The battery pack as claimed in claim 2, wherein at least one buffer groove (210) of the plurality of buffer grooves (210) is penetrated along the first direction.

4. The battery pack as claimed in claim 2, wherein the buffer groove (210) comprises a bottom wall and a side wall; and
an intersection between the side wall and the connecting portion (220) transitions smoothly; and/or
an intersection between the bottom wall and the side wall transitions smoothly.

5. The battery pack as claimed in claim 2, wherein the battery pack further comprises a buffer pad (240), and the buffer pad (240) is arranged on at least one side surface, facing the accommodating unit, of the cross beam (200) and/or the side plate.

6. The battery pack as claimed in claim 1, wherein a first mounting groove (250) is provided in a top surface of the cross beam (200), a first through hole (251) passing through a groove bottom of the first mounting groove (250) is provided inside the cross beam (200), and a first connecting hole (151) corresponding to the first through hole (251) is provided in the bottom plate (150); and
the battery pack further comprises a first fixing member, and the first fixing member is configured to pass through the first through hole (251) to be connected to the first connecting hole (151), and fix the cross beam (200) to the bottom plate (150); and in the first mounting groove (250), a height of a top end of the first fixing member is lower than a height of the top surface of the cross beam (200).

7. The battery pack as claimed in claim 1, wherein the battery pack further comprises a pressing strip (400), the pressing strip (400) comprises a pressing strip mounting portion (410) and a pressing strip body portion (420), a plurality of pressing strip mounting portion (410) are provided, and the pressing strip body portion (420) is arranged between two adjacent pressing strip mounting portions (410) of the plurality of pressing strip mounting portion (410), the pressing strip body portion (420) extends along the third direction and is pressed on a top surface of the battery cell group (300), the pressing strip mounting portion (410) is fixed to the cross beam (200) and/or the side plate, and the pressing strip mounting portion (410) is arranged at an intersection of the pressing strip (400) and the side plate and/or the cross beam (200).

8. The battery pack as claimed in claim 7, wherein the battery pack further comprises a second fixing member (500); the pressing strip mounting portion (410) comprises a first pressing portion (411) and a first plug-in connection portion (413) perpendicular to the first pressing portion (411), a second mounting groove (415) is provided in the first pressing portion (411), a second through hole (417) is provided in a groove bottom of the second mounting groove (415), a second connecting hole (260) corresponding to the second through hole (417) is provided in the cross beam (200) and/or the side plate, and the second fixing member (500) passes through the second through hole (417) to be connected to the second connecting hole (260), and fixes the pressing strip (400) on the cross beam (200) and/or the side plate.

9. The battery pack as claimed in claim 8, wherein an upper surface of the second fixing member (500) is lower than an upper surface of the pressing strip body portion (420).

10. The battery pack as claimed in claim 8, wherein a plurality of spacer plates (270) for dividing an inner cavity of the cross beam (200) into a plurality of cavities (271) are arranged inside the cross beam (200), the second connecting hole (260) penetrates through a top surface of the cross beam (200) and the spacer plate (270) adjacent to the top surface of the cross beam (200), and the second fixing member (500) is a riveting screw.

11. The battery pack as claimed in claim 7, wherein the pressing strip body portion (420) comprises a second pressing portion (421) and a second plug-in connection portion (423) perpendicular to the second pressing portion (421), two ends of a top surface of the battery cell along the second direction are shoulders of the battery cell, the second pressing portion (421) is pressed on the shoulders of the battery cell, the second plug-in connection portion (423) is plugged into a gap between two adjacent battery cell groups (300) of the plurality of battery cell groups (300), and/or the second plug-in connection portion (423) is plugged into a gap between the battery cell group (300) and the side plate.

12. The battery pack as claimed in claim 11, wherein a thickness of the second plug-in connection portion (423) gradually decreases along a direction facing away from the second pressing portion (421), and a size of the gap between the two adjacent battery cell groups (300) is less than a maximum thickness of the second plug-in connection portion (423) and is greater than a minimum thickness thereof, and a size of the gap between the battery cell group (300) and the side plate is less than the maximum thickness of the second plug-in connection portion (423) and is greater than the minimum thickness thereof.

13. The battery pack as claimed in claim 7, wherein the pressing strip (400) comprises a first pressing strip (401), at least two first pressing strips (401) are provided, and the at least two first pressing strips (401) are respectively pressed on two opposite side edges of the top surface of the battery cell group (300).

14. The battery pack as claimed in claim 13, wherein a section of the pressing strip body portion (420) of the first pressing strip (401) along the second direction is L-shaped.

15. The battery pack as claimed in claim 13, wherein the pressing strip (400) further comprises a second pressing strip (402), at least one second pressing strip (402) is provided, and the at least one second pressing strip (402) is pressed on the top surface, away from the bottom plate (150), of the battery cell group (300).

16. The battery pack as claimed in claim 15, wherein a section of the pressing strip body portion (420) of the second pressing strip (402) along the second direction is T-shaped.

17. The battery pack as claimed in claim 8, wherein a third mounting groove (280) is provided in the cross beam (200) and/or the side plate, and the first plug-in connection portion (413) is in interference fit with the third mounting groove (280).

18. The battery pack as claimed in claim 17, wherein a plurality of spacer plates (270) for dividing an inner cavity of the cross beam (200) into a plurality of cavities (271) are arranged inside the cross beam (200), and a bottom surface of the third mounting groove (280) is located on the spacer plate (270) adjacent to a top surface of the cross beam (200).

19. The battery pack as claimed in claim 17, wherein two opposite sides of the third mounting groove (280) are both provided with a supporting portion (290) for supporting the first pressing portion (411), and the second connecting hole (260) is provided in the supporting portion (290).

20. The battery pack as claimed in claim 7, wherein an outer surface of the pressing strip body portion (420) is covered with an elastic insulating layer (430).

21. The battery pack as claimed in claim 11, wherein an outer surface of the pressing strip body portion (420) is covered with an elastic insulating layer (430), an overall thickness of the elastic insulating layer (430) and the second plug-in connection portion (423) gradually decreases along a direction facing away from the second pressing portion (421), a maximum value of the overall thickness of the second plug-in connection portion (423) and the elastic insulating layer (430) is greater than a size of the gap between the two adjacent battery cell groups (300), and a minimum value thereof is less than the size of the gap between the two adjacent battery cell groups (300), and the maximum value of the overall thickness of the second plug-in connection portion (423) and the elastic insulating layer (430) is greater than a size of the gap between the battery cell group (300) and the side plate, and the minimum value thereof is less than the size of the gap between the battery cell group (300) and the side plate.

22. The battery pack as claimed in claim 7, wherein the pressing strip mounting portion (410) and the pressing strip body portion (420) are integrally formed.

23. The battery pack as claimed in claim 22, wherein a section of the pressing strip mounting portion (410) along the second direction is the same as a section of the pressing strip body portion (420) along the second direction.

24. The battery pack as claimed in claim 8, wherein an avoidance groove (419) is provided at a cooperative mounting location of the pressing strip mounting portion (410) and the side plate and/or the cross beam (200).

25. The battery pack as claimed in claim 1, wherein a cross beam mounting portion (121) is arranged on the side plate and/or the bottom plate (150), and an end portion of the cross beam (200) is fixedly connected to the cross beam mounting portion (121).

26. The battery pack as claimed in claim 1, wherein a positioning slot (160) is provided in the bottom plate (150), and an electrode terminal of the battery cell (310) is plugged into the positioning slot (160).

27. The battery pack as claimed in claim 26, wherein the battery pack further comprises a busbar (600) installed on the bottom plate (150) in an insulating manner, the busbar (600) is provided with a conducting portion (610) for conducting the electrode terminal, the conducting portion (610) is located in the positioning slot (160), and the busbar (600) is fixedly connected to the bottom plate (150); and
in response to the electrode terminal being plugged into the positioning slot (160), the conducting portion (610) conducts the electrode terminal.

28. The battery pack as claimed in claim 26, wherein the positioning slot (160) is a trench; and
the plurality of battery cells (310) are arranged along an extension direction of the trench, a plurality of conducting portions (610) are arranged at intervals in the trench at locations corresponding to electrode terminals of the plurality of battery cells (310).

29. The battery pack as claimed in claim 28, wherein the bottom plate (150) is provided with a first strip-shaped protrusion portion (152) and a second strip-shaped protrusion portion (153), which are parallel to each other, and the first strip-shaped protrusion portion (152) and the second strip-shaped protrusion portion (153) form the trench; and
a first heat exchange flow channel (154) is arranged inside the first strip-shaped protrusion portion (152), and a second heat exchange flow channel (155) is arranged inside the second strip-shaped protrusion portion (153).

30. The battery pack as claimed in claim 29, wherein the first heat exchange flow channel (154) and the second heat exchange flow channel (155) are parallel to the trench.

31. The battery pack as claimed in claim 29, wherein the bottom plate (150) further comprises a substrate portion (156), and the first strip-shaped protrusion portion (152) and the second strip-shaped protrusion portion (153) are both arranged on the substrate portion (156); and
a heat exchange through hole (157) parallel to the first heat exchange flow channel (154) is provided inside the substrate portion (156), and the heat exchange through hole (157) at least partially extends below a groove bottom of the trench.

32. The battery pack as claimed in claim 27, wherein the conducting portion (610) is U-shaped and forms a U-shaped groove for plug-in connection with the electrode terminal; and
groove walls on two opposite sides of the U-shaped groove both protrude at the middle and form clamping protrusions for clamping the electrode terminal.

33. The battery pack as claimed in claim 27, wherein the electrode terminal is provided with a plurality of strip-shaped protrusions (311) in parallel; and
a plurality of plug-in connection grooves in plug-in connection with the plurality of strip-shaped protrusions (311) are correspondingly provided in the conducting portion (610).

34. The battery pack as claimed in claim 26, wherein the positioning slot (160) is a rectangular groove, a V-shaped groove, a spherical groove, or a conical groove.

35. The battery pack as claimed in claim 1, wherein the bottom plate (150) is provided with an insulating heat conduction layer (700), and the battery cell (310) is pressed on the insulating heat conduction layer (700).
